# EUROPEAN PATENT SPECIFICATION

(11) **EP 0 867 482 B1**
(45) Date of publication and mention of the grant of the patent: **24.07.2002**
(21) Application number: 98302298.9
(22) Date of filing: 26.03.1998
(51) Int. Cl.: C09D 9/00

(54) **Paint removing composition**
Entlackungsmittel-Zusammensetzung
Composition décapante

(30) Priority: 26.03.1997 GB 9706254
(43) Date of publication of application: 30.09.1998
(73) Proprietor: Imperial Chemical Industries Plc., London W1U 4AN (GB)
(72) Inventor: Charnock, Ronald Scott, Blunham, Bedfordshire, MK44 3ND (GB); Deamer, Derrick Frederick, Stevenage, Hertfordshire, SG1 4DZ (GB); Harris, Antony John, Hatfield, Hertfordshire, AL10 8HA (GB)
(74) Representative: Cooper, Alan Victor

(56) References cited:
- EP-A- 0 105 742
- EP-A- 0 327 290
- WO-A-92/05224
- GB-A- 2 143 842
- US-A- 3 705 857

## Description

The present invention relates to a paint, varnish and wood stain stripping composition and a method of removing a paint, varnish or wood stain film from a substrate as a dry residue.

Commercially available paint, varnish and wood stain stripping compositions are generally based on mixtures of solvents, such as dichloromethane, alcohols, hydrocarbons, esters, ethers, glycols and N-methyl pyrrolidone. Their mode of action is by direct solvent attack of the paint, varnish or wood stain film. This results in softening of the film by, for example, plasticisation of the binder, and/or blistering of the film owing to vapour pressure effects resulting from the volatile nature of certain solvents. A problem exists, however, in that the paint, varnish or wood stain residue must be removed before the solvent has evaporated, otherwise the residue re-adheres to the substrate surface. Accordingly, stripping paint, varnish or wood stain using conventional stripping compositions is complicated by the fact that a sticky and wet residue consisting of paint/varnish/wood stain and solvent has to be physically removed from the substrate surface.

As an alternative approach, formulations based on sodium or potassium hydrochloride have been used. Such formulations act by alkaline hydrolysis of the paint resin binder and are difficult to handle owing to their corrosive nature, which also has the effect of attacking certain types of wood, causing a blackening of the wood grain.

The inventors have now produced a novel paint, varnish and wood stain removing composition which addresses the problems associated with the prior art.

GB-A-2 143 842 relates to a textured paint stripping composition.

US-A-3 705 857 relates to a fast acting stripping composition for use on substrates that have been primed with poyvinyl butyral.

Accordingly, in a first aspect the present invention provides a method of removing a film of paint, varnish or woodstain from a substrate, which film contains a binder which bonds it to the substrate and which is softenable by means of a solvent, wherein the method involves:
a) softening the binder by applying onto the substrate, so as to contact the film, a layer of a stripping composition containing a solvent, at least 10 wt.% (based on the total weight of the stripping composition) of a particulate mineral material and also a film-forming polymer whereupon the solvent softens the binder thereby disrupting the bond between the film and the substrate and causing a mixture of the solvent and softened residue of the film to absorb into the layer of stripping composition, wherein
b) the layer of stripping composition containing the softened film residue is retained on the substrate until the solvent has evaporated to leave a dry layer of particulate material containing the film residue, and
c) the dry layer of particulate mineral material and film residue is physically removed from the substrate as a dry residue.

In a second aspect the present invention provides a stripping composition for use in removing paint, varnish or woodstain of the type containing a binder, which stripping composition contains:
(i) a solvent capable of softening the binder present in the paint, varnish or woodstain,
(ii) at least 10 wt.% of a particulate mineral material, and
   wherein the stripping composition also contains
(iii) a film-forming polymer.

The particulate mineral material must be present in the composition in an amount sufficient to enable the removal of a paint, varnish or wood stain film from a substrate as a substantially dry residue. The particulate mineral material needs to be present in an amount of at least 10 wt.%, and preferably at least 15 wt.%, in order to achieve the desired result. Although the particulate mineral material may act to some extent as an inert thickener or extender, i.e. it preferably does not thicken by chemical reaction with the other constituent(s) in the composition, its primary purpose is to enable the removal of a paint, varnish or wood stain film from a substrate as a substantially dry residue.

The stripping composition is a solvent-action composition, by which is meant a composition which contains one or more solvents capable of attacking paint, varnish or wood stain in the conventional manner as described above. The stripping composition according to the present invention is suitable for removing most types of paint, varnish, wood stains and the like, for example solvent-based alkyd gloss paints, egg-shell paints, polyurethane and oil-based varnishes and water-based resin emulsions.

The particulate mineral material is preferably inert in that there is little or no chemical reaction with the other constituent(s) in the composition. The mineral material preferably comprises a silicate-based powder, a calcium carbonate-based powder, a calcium magnesium carbonate-based powder or a combination of two or more thereof.

The silicate-based powder preferably comprises particles of a clay mineral, an organic derivative thereof, an organopolysilicate or a combination thereof. Examples of suitable clay minerals include kaolinite, halloysite, illite, montmorillonite, bentonite, vermiculite, atapulgite, saponite or a combination of two or more thereof and optionally mica and/or quartz. Advantageously, the silicate-based powder comprises powdered china clay, smectite clay or a combination thereof, including organic derivatives thereof. The silicate-based powder is preferably present in the stripping composition in an amount of from 10 to 60 wt.%, preferably from 20 to 50 wt.%, still more preferably about 38 wt.%.

Examples of suitable calcium carbonate-based powders and calcium-magnesium carbonate-based powders include powdered chalk, for example French chalk, powdered marble and powdered Dolomite.

In general, the particulate mineral material is preferably present in the composition in an amount of from 20 to 70 wt.%, more preferably from 30 to 60 wt.%, still more preferably from 36 to 56 wt.%.

The particulate mineral material may have a dispersant, such as an aliphatic amine, associated therewith.

The particulate mineral material preferably has a fine particle size and hence a large surface area. Advantageously, substantially all of the particle have a size of less than about 10 µm, preferably less than about 5 µm, more preferably less than about 2 µm.

A particularly suitable silicate-based powder for use in the stripping composition according to the present invention comprises china clay, in which from 70 to 90%, preferably about 80%, of the particles have a size of less than about 2 µm. Such a composition retards the initial action of the one or more solvents on the paint, varnish or wood stain film and also absorbs the paint, varnish or wood stain residue/solvent mixture, which can consequently be lifted out of the wood grain.

The stripping composition according to the present invention contains one or more paint, varnish and/or wood stain removing solvents, such as those conventional in the art. Examples include dichloromethane, alcohols such as methanol and denatured ethanol, hydrocarbons such as toluene and benzene, esters such as ethyl acetate, ethers, glycols and N-methyl pyrrolidone. The one or more solvents are preferably present in the composition in an amount of from 30 to 80 wt.%, more preferably from 40 to 60 wt.%.

A film-forming polymer is added to the composition of the present invention in order to bind together the particles of the mineral material once the composition has dried. The addition of a film-forming polymer is beneficial since it maintains the integrity of the dried composition and facilitates its removal together with the underlying paint, varnish or wood stain from a substrate. An example of suitable film-forming polymer is a powder polymer, preferably a redispersible powder polymer. A particularly suitable film-forming polymer comprises polyvinyl pyrrolidone or polyvinyl acetate homo- or co-polymer redispersible powders or mixtures thereof. The weight ratio of the film-forming polymer to the particulate mineral material is preferably from 1:10 to 1.35, more preferably about 1:19. The stripping composition will generally comprise from 0.3 to 10 wt.% of the film-forming polymer, more preferably from 1 to 5 wt.%.

It will be appreciated that the stripping composition may further comprise one or more of water, a retarder, such as paraffin wax, a surfactant, such as a primary fatty alcohol ethoxylate, a thickening agent, such as a cellulosic thickening agent, a dispersing agent and an anti-settling agent.

In the method according to the present invention it will be appreciated that removal of the substantially dry particulate mineral material layer may be effected by, for example, brushing, scraping, peeling, rubbing, crushing and/or sanding.

The substrate will generally comprise wood, although the stripping composition according to the present invention may also be used on paint, varnish or wood stain films supported on metals or alloys, such as copper or lead piping, ceramics, such as brick and stone work, and certain solvent-resistant plastics materials.

It is thought that the effect of the particulate mineral material is to retard the initial action of solvent on the paint, varnish or wood stain film. Because the solvent is held in contact with the film by a layer of the particulate mineral material and optional resin binder, the composition can act over a longer period of time. During this extended period, it has been observed that, as the particulate mineral material dries out, the underlying paint, varnish or wood stain film is disrupted by the controlled solvent action. If this process is allowed to continue until the particulate mineral material layer is substantially dry, then the paint, varnish or wood stain film remains in its disrupted form, with little adhesion to the surface. At this stage it is easily removed by, for example, brushing or scraping in the conventional manner.

A further benefit of the present invention is that the particulate mineral material layer is able to absorb, perhaps by capillary action, the paint, varnish or wood stain residue/solvent mixture, and this can therefore be lifted out of the wood grain. This is particularly advantageous when the composition is used on varnished or stained wood, where the colouration of the stain can be absorbed into the inert mineral powder.

The present invention will now be described further with reference to the following examples.

### Example 1

| **RAW MATERIAL** | **TYPE/GRADE** | **SUPPLIER** | **% w/w** |
|---|---|---|---|
| Solvent | N-methyl pyrrolidone | B.A.S.F. | 15.0 |
| Solvent Naphtha | Shellsol A | Shell | 41.10 |
| Cellulosic Thickening Agent | Methocel 311 | Dow | 0.48 |
| Surfactant | Lutensol TO5 | B.A.S.F. | 1.80 |
| Fumed Silica | HDK N20 | Wacker | 1.50 |
| Dispersing Agent | Disperbyk | Byk | 0.12 |
| Polyvinyl Pyrrolidone | Luviskol K80 | B.A.S.F. | 2.00 |
| China Clay | Speswhite | ECC | 38.00 |

The above formulation was prepared by pre-mixing the film forming additives and then adding them to a slurry made up of the remaining ingredients. The powders were added slowly under high shear at room temperature. Mixing was carried out using a Silverson L4 RT with a disintegrating head at 6000 rpm for ten minutes. Once a smooth, homogeneous paste was achieved, the mixture, which has the form of a viscous gel/suspension, was removed for application.

Using a brush, a continuous layer of the paste was spread over a test paint film on a chest of drawers. After six hours the paint had been loosened from the wooden surface and the formulation was substantially dry. The dry residue was easily removed by brushing with a wire brush exposing the bare wood underneath in a suitable condition for refinishing.

### Example 2

| **RAW MATERIAL** | **TYPE/GRADE** | **SUPPLIER** | **% w/w** |
|---|---|---|---|
| Solvent | Methylene Chloride | I.C.I. | 48 |
| Methanol | Methanol | Samuel Banner | 5.5 |
| Solvent Naphtha | Shellsol A | Shell | 2.9 |
| Paraffin Wax | AW2139 | Eggar & Co. | 0.4 |
| Ammonia | 0.880 SG | Ellis & Everard | 0.5 |
| Solvent | Methoxy Propoxy Propanol | Samuel Banner | 1.6 |
| Surfactant | Synperonic NP8 | I.C.I. | 0.5 |
| Cellulose Thickening Agent | Methocel 311 | Dow | 0.5 |
| China Clay | Speswhite | ECC | 38.1 |
| Polyvinyl Acetate | Elotex HM 110 | Elotex | 2 |

The above formulation was again prepared by the post addition of the powders to the pre-mixed liquid ingredients. The powders were added slowly under high shear into a Mastermix with a high speed dispersing head. After several minutes of mixing at room temperature a homogeneous paste was formed.

The paste was then applied to a wooden test panel coated with gloss paint. After 30 minutes the paint layer had blistered and an hour later the residue had dried and was removed using a wire brush. The wooden test panel was observed to be free of paint and dry residue.

### Example 3

The following formulation was made by premixing the liquid ingredients and then slowly adding the powder ingredients. The powders were added at room temperature under high shear using a Silverson L4RT mixer with a disintegrating head.

| **RAW MATERIAL** | **TYPE/GRADE** | **SUPPLIER** | **% w/w** |
|---|---|---|---|
| Solvent | Propylene Carbonate | Huntsman Corp. | 9.8 |
| Solvent | Methyl iso amyl ketone | Samuel Banner | 5 |
| Solvent | 3-Ethoxy ethyl propionate | Samuel Banner | 9.8 |
| Solvent | Propylene glycol ethyl ether | Dow | 7.1 |
| Solvent | Mixture of Dimethyl Glutorate " " Succinate " " Adipate | DuPont | 5 |
| Solvent | Benzyl alcohol | Bayer | 12.3 |
| Water | Water | | 5 |
| Cellulose Thickening Agent | Methocel 311 | Dow | 1 |
| China Clay | Speswhite | ECC | 38 |
| Polyvinyl Pyrrolidone | Luviskol K80 | BASF | 2 |
| Solvent | Acetone | Samuel Banner | 5 |

This formulation was tested on an old work desk having a varnish film thereon. After four hours a crust formed and the dry residue was brushed away using a wire brush. A significant amount of the resin from the varnish had entered the crust and had dried. After the crust was removed bare unstained wood was visible.

### Example 4

The following formulation was made by premixing the liquid ingredients and then slowly adding the powder ingredients. The powders were added at room temperature under medium shear, slowly, into a Mastermix with a Cowles dispersing head. After approximately 20 minutes of mixing, a white, homogenous paste was formed.

| **RAW MATERIAL** | **TYPE/GRADE** | **SUPPLIER** | **% w/w** |
|---|---|---|---|
| Solvent | Methylene Chloride | ICI | 33.76 |
| Solvent | Methanol | Samuel Banner | 3.87 |
| Solvent | Naphtha / Shellsol A | Shell | 2.04 |
| Ammonia | 0.880 SG | Ellis & Everard | 0.35 |
| Paraffin Wax | AW2139 | Eggar & Co. | 0.28 |
| Solvent | Methoxy Propoxy Propanol | Samuel Banner | 1.13 |
| Cellulose Thickening Agent | Methocel 311 | Dow | 0.35 |
| Calcium Carbonate | Marble Powder M300 | Fortafix | 55.6 |
| Polyvinyl Pyrrolidone | Luviskol K30 | BASF | 2.27 |
| Surfactant | Synperonic NP8 | ICI | 0.35 |

The paste was then applied to a gloss painted wooden door which was several years old. After approximately 30 minutes, blistering of paint was observed underneath the poultice. After approximately another hour, the residue had dried and was removed by gentle scraping to leave the door free of paint and dry residue.

The method of paint, varnish or wood stain removal according to the present invention is by solvent action, but unlike existing formulations, the composition contains at least 10 wt.% of a particulate mineral material which converts the paint/stripper residue into a dry powdery crust, which can be crushed or scraped away.

The paint stripping composition is particularly, but not exclusively, suitable for use in a DIY (Do-It-Yourself) method of removing paint, varnish or wood stain in a domestic environment.

The present invention provides a convenient method of removing paint, varnish or wood stain as a dry residue by the addition of a particulate mineral material and a film-forming polymer to conventional solvent systems.

## Claims

1. A method of removing a film of paint, varnish or woodstain from a substrate, which film contains a binder which bonds it to the substrate and which is softenable by means of a solvent, wherein the method involves:
a) softening the film by plasticisation of the binder by applying onto the substrate, so as to contact the film, a layer of a stripping composition containing a solvent, at least 10 wt.% (based on the total weight of the stripping composition) of a particulate mineral material and also a film-forming polymer whereupon the solvent softens the binder thereby disrupting the bond between the film and the substrate and causing a mixture of the solvent and softened residue of the film to absorb on the particulate mineral material into the layer of stripping composition,
**characterised in that**
b) the layer of stripping composition containing the softened film residue is retained on the substrate until the solvent has evaporated to leave a dry layer of particulate material containing the film residue, and
c) the dry layer of particulate mineral material and film residue is physically removed from the substrate as a dry residue.

2. A method according to Claim 1 **characterised in that** substantially all of the particulate mineral material has a particle size of less than 10 µm.

3. A method according to Claim 1 or Claim 2 **characterised in that** the stripping composition contains from 36 to 70 wt.% of the particulate mineral material.

4. A method according to any one of Claims 1 to 3 **characterised in that** the stripping composition contains from 0.3 to 10 wt.% (based on the total weight of the composition) of a film-forming polymer.

5. A method according to Claim 4 **characterised in that** the film-forming polymer is a homopolymer or a copolymer of vinyl pyrrolidone or vinyl acetate.

6. A method according to any one of Claims 1 to 5 **characterised in that** the particulate mineral material comprises a silicate-based powder, a calcium carbonate-based powder, a calcium-magnesium carbonate-based powder or a combination of two or more thereof.

7. A method according to any one of Claims 1 to 6 **characterised in that** the solvent in the stripping composition is selected from one or more of dichloromethane, an alcohol, a hydrocarbon, an ester, an ether, a glycol and N-methyl pyrrolidone.

8. A stripping composition for use in removing paint, varnish or woodstain of the type containing a binder, which stripping composition contains:
(i) a solvent capable of softening the binder present in the paint, varnish or woodstain,
(ii) at least 10 wt.% of a particulate mineral material, and
wherein the stripping composition also contains
(iii) a film-forming polymer.

9. A stripping composition according to Claim 8 wherein the composition contains from 0.3 to 10 wt.% (based on the total weight of the composition) of the film-forming polymer.

10. A stripping composition according to Claim 8 or Claim 9 wherein the film-forming polymer is a homopolymer or a copolymer of vinyl pyrrolidone or vinyl acetate.

11. A stripping composition according to any one of Claims 8 to 10 wherein the composition contains from 36 to 70 wt.% of the particulate mineral material.

12. A stripping composition according to any one of Claims 8 to 11 wherein the weight ratio of film-forming polymer to mineral material is from 1:10 to 1:35.

13. A stripping composition according to any one of Claims 8 to 12 wherein the particulate mineral material comprises a silicate-based powder, a calcium carbonate-based powder, a calcium-magnesium carbonate-based powder or a combination of two or more thereof.

## Patentansprüche

1. Verfahren zur Entfernung eines Films einer Anstrichfarbe, eines Lacks oder einer Holzbeize von einem Substrat, wobei der Film ein Bindemittel enthält, das ihn an das Substrat bindet und das mit Hilfe eines Lösemittels erweichbar ist, wobei das Verfahren umfaßt:
a) Erweichen des Films durch Plastifikation des Bindemittels, indem man auf das Substrat auf eine Weise, daß sie mit dem Film im Kontakt ist, eine Schicht einer Entlackungsmittelzusammensetzung aufbringt, die ein Lösemittel, wenigstens 10 Gew.-% (bezogen auf das Gesamtgewicht der Entlackungsmittelzusammensetzung) eines teilchenförmigen mineralischen Materials sowie außerdem ein filmbildendes Polymer enthält, worauf das Lösemittel das Bindemittel erweicht und dadurch die Bindung zwischen dem Film und dem Substrat löst und bewirkt, daß eine Mischung des Lösemittels und des erweichten Rückstands des Films an dem teilchenförmigen mineralischen Material in der Schicht der Entlackungsmittelzusammensetzung absorbiert wird,
**dadurch gekennzeichnet, daß**
b) man die Schicht der Entlackungsmittelzusammensetzung, die den Rückstand des erweichten Films enthält, auf dem Substrat beläßt, bis das Lösemittel verdampft ist, wobei eine trockene Schicht von teilchenförmigem Material zurückbleibt, die den Filmrückstand enthält, und
c) man die trockene Schicht aus teilchenförmigem mineralischen Material und Filmrest physikalisch als trockenen Rückstand von dem Substrat entfernt.

2. Verfahren nach Anspruch 1, **dadurch gekennzeichnet, daß** im wesentlichen die Gesamtmenge des teilchenförmigen mineralischen Materials eine Teilchengröße von weniger als 10 µm aufweist.

3. Verfahren nach Anspruch 1 oder Anspruch 2, **dadurch gekennzeichnet, daß** die Entlackungsmittelzusammensetzung von 36 bis 70 Gew.-% des teilchenförmigen mineralischen Materials enthält.

4. Verfahren nach irgendeinem der Ansprüche 1 bis 3, **dadurch gekennzeichnet, daß** die Entlackungsmittelzusammensetzung von 0,3 bis 10 Gew.-% (bezogen auf das Gesamtgewicht der Zusammensetzung) eines filmbildenden Polymers enthält.

5. Verfahren nach Anspruch 4, **dadurch gekennzeichnet, daß** das filmbildende Polymer eine Homopolymer oder ein Copolymer von Vinylpyrrolidon oder Vinylacetat ist.

6. Verfahren nach irgendeinem der Ansprüche 1 bis 5, **dadurch gekennzeichnet, daß** das teilchenförmige mineralische Material ein Pulver auf Silicatbasis, ein Pulver auf Calciumcarbonatbasis, ein Pulver auf Calcium-Magnesiumcarbonatbasis oder eine Kombination von zwei oder mehr davon umfaßt.

7. Verfahren nach irgendeinem der Ansprüche 1 bis 6, **dadurch gekennzeichnet, daß** das Lösemittel in der Entlackungsmittelzusammensetzung ausgewählt ist aus einem oder mehreren von Dichlormethan, einem Alkohol, einem Kohlenwasserstoff, einem Ester, einem Ether, einem Glycol und N-Methylpyrrolidon.

8. Entlackungsmittelzusammensetzung zur Verwendung bei der Entfernung einer Anstrichfarbe, eines Lacks oder einer Holzbeize eines Typs, die ein Bindemittel enthalten, wobei die Entlackungsmittelzusammensetzung enthält:
(i) ein Lösemittel, das in der Lage ist, das in der Anstrichfarbe, dem Lack oder der Holzbeize enthaltene Bindemittel zu erweichen,
(ii) wenigstens 10 Gew.-% eines teilchenförmigen mineralischen Materials, und
wobei die Entlackungsmittelzusammensetzung ferner enthält
(iii) ein filmbildendes Polymer.

9. Entlackungsmittelzusammensetzung nach Anspruch 8, wobei die Zusammensetzung von 0,3 bis 10 Gew.-% (bezogen auf das Gesamtgewicht der Zusammensetzung) des filmbildenden Polymers enthält.

10. Entlackungsmittelzusammensetzung nach Anspruch 8 oder Anspruch 9, wobei das filmbildende Polymer ein Homopolymer oder ein Copolymer von Vinylpyrrolidon oder Vinylacetat ist.

11. Entlackungsmittelzusammensetzung nach irgendeinem der Ansprüche 8 bis 10, wobei die Zusammensetzung von 36 bis 70 Gew.-% des teilchenförmigen mineralischen Materials enthält.

12. Entlackungsmittelzusammensetzung nach irgendeinem der Ansprüche 8 bis 11, wobei das Gewichtsverhältnis des filmbildenden Polymers zu dem mineralischen Material von 1:10 bis 1:35 beträgt.

13. Entlackungsmittelzusammensetzung nach irgendeinem der Ansprüche 8 bis 12, wobei das teilchenförmige mineralische Material ein Pulver auf Silicatbasis, ein Pulver auf Calciumcarbonatbasis, ein Pulver auf Calcium-Magnesiumcarbonatbasis oder eine Kombination von zwei oder mehr davon enthält.

## Revendications

1. Procédé pour éliminer un film de peinture, de vernis ou de teinture à bois d'un substrat, film qui contient un liant qui le lie au substrat et qui peut être ramolli au moyen d'un solvant, ledit procédé comprenant :
a) le ramollissement du film par plastification du liant en appliquant sur le substrat, de manière à ce qu'il entre en contact avec le film, une couche d'une composition d'élimination contenant un solvant, au moins 10 % en poids (sur la base du poids total de la composition d'élimination) d'une matière minérale en particules et également un polymère filmogène, le solvant ramollissant alors le liant en rompant ainsi la liaison entre le film et le substrat et en provoquant l'absorption d'un mélange du solvant et du résidu ramolli du film sur la matière minérale en particules dans la couche de composition d'élimination,
**caractérisé en ce que**
b) la couche de composition d'élimination contenant le résidu de film ramolli est retenue sur le substrat jusqu'à l'évaporation du solvant pour laisser une couche sèche de matière en particules contenant le résidu du film, et
c) la couche sèche de matière minérale en particules et de résidu de film est éliminée physiquement du substrat sous forme d'un résidu sec.

2. Procédé suivant la revendication 1, **caractérisé en ce que** pratiquement la totalité de la matière minérale en particules a un diamètre de particules inférieur à 10 µm.

3. Procédé suivant la revendication 1 ou la revendication 2, **caractérisé en ce que** la composition d'élimination contient 36 à 70 % en poids de la matière minérale en particules.

4. Procédé suivant l'une quelconque des revendications 1 à 3, **caractérisé en ce que** la composition d'élimination contient 0,3 à 10 % en poids (sur la base du poids total de la composition) d'un polymère filmogène.

5. Procédé suivant la revendication 4, **caractérisé en ce que** le polymère filmogène est un homopolymère ou un copolymère de vinylpyrrolidone ou d'acétate de vinyle.

6. Procédé suivant l'une quelconque des revendications 1 à 5, **caractérisé en ce que** la matière minérale en particules comprend une poudre à base de silicate, une poudre à base de carbonate de calcium, une poudre à base de carbonate de calcium-magnésium ou une association de deux ou plus de deux de ces poudres.

7. Procédé suivant l'une quelconque des revendications 1 à 6, **caractérisé en ce que** le solvant dans la composition d'élimination consiste en un ou plusieurs solvants choisis entre le dichlorométhane, un alcool, un hydrocarbure, un ester, un éther, un glycol et la N-méthylpyrrolidone.

8. Composition d'élimination destinée à être utilisée pour éliminer une peinture, un vernis ou une teinture à bois du type contenant un liant, composition d'élimination qui contient :
(i) un solvant capable de ramollir le liant présent dans la peinture, le vernis ou la teinture à bois,
(ii) au moins 10 % en poids d'une matière minérale en particules, et
la composition d'élimination contenant également
(iii) un polymère filmogène.

9. Composition d'élimination suivant la revendication 8, qui contient 0,3 à 10 % en poids (sur la base du poids total de la composition) du polymère filmogène.

10. Composition d'élimination suivant la revendication 8 ou la revendication 9, dans laquelle le polymère filmogène est un homopolymère ou copolymère de vinylpyrrolidone ou d'acétate de vinyle.

11. Composition d'élimination suivant l'une quelconque des revendications 8 à 10, qui contient 36 à 70 % en poids de la matière minérale en particules.

12. Composition d'élimination suivant l'une quelconque des revendications 8 à 11, dans laquelle le rapport pondéral du polymère filmogène à la matière minérale est compris dans l'intervalle de 1:10 à 1:35.

13. Composition d'élimination suivant l'une quelconque des revendications 8 à 12, dans laquelle la matière minérale en particules comprend une poudre à base de silicate, une poudre à base de carbonate de calcium, une poudre à base de carbonate de calcium-magnésium ou une association de deux ou plus de deux de ces poudres.
